# EUROPEAN PATENT APPLICATION

(11) **EP 1 925 973 A2**
(43) Date of publication of application: **28.05.2008**
(21) Application number: 07121174.2
(22) Date of filing: 21.11.2007
(51) Int. Cl.: G02F 1/13357, H01J 63/04, H01J 61/30

(54) **Diffusing member, light emission device with the diffusing member, display having the light emission device**

(30) Priority: 21.11.2006 KR 20060115142
(71) Applicant: Samsung SDI Co., Ltd., Suwon-si Gyeonggi-do (KR)
(72) Inventor: Kang, Su-Joung Legal & IP Team, Samsung SDI Co., LTD.,, Gyeonggi-do (KR)
(74) Representative: Hengelhaupt, Jürgen

(57) **Abstract**

A diffusing member (or diffuser 36, 38), a light emission device (10) having the diffusing member (36, 38), and a display (50) using the light emission device (10) are provided. The diffusing member (36, 38) is for uniformly diffusing light emitted from a surface light source of a backlight unit for a non-emissive device. The diffusing member (36, 38) has a light transmittance greater than or equal to 80%. The light emission device (10) includes a vacuum vessel that has first and second substrates (12, 14) facing each other, an electron emission unit (18) that is provided on the first substrate (12), a light emission unit (20) that is provided on the second substrate (14) and that emits light using electrons emitted from the electron emission unit (18), a spacer (34) that uniformly maintains a gap between the first and second substrates (12, 14), and a diffusing member (36, 38) that is located above the second substrate (14).

## Description

### BACKGROUND OF THE INVENTION

### 1. Field of the Invention

The present invention relates to a light emission device and a display having the light emission device, and more particularly, to a diffusing member (or diffuser) of the light emission device.

### 2. Description of Related Art

A liquid crystal display is a non-emissive display that displays an image using an external light source. The liquid crystal panel includes a liquid crystal panel assembly and a backlight unit for emitting light toward the liquid crystal panel assembly. The liquid crystal panel assembly receives the light from the backlight unit and selectively transmits or blocks the light using a liquid crystal layer, thereby displaying an image.

According to its light source, the backlight unit can be categorized into different types, one of which is a cold cathode fluorescent lamp (CCFL). The CCFL is a linear light source that can uniformly emit light to the liquid crystal panel assembly through an optical member such as a diffusion sheet, a diffuser plate, and/or a prism sheet.

However, since the CCFL emits the light through the optical member, there may be some light loss. Considering this light loss, the CCFL needs to consume a relatively large amount of power to emit a high intensity of light, thereby increasing the overall power consumption of the liquid crystal display employing the CCFL. In addition, due to its structural limitation, it is difficult to enlarge the display employing the CCFL; i.e., it is difficult to apply CCFL to a liquid crystal display that is over 30 inches.

Instead of CCFL, a backlight unit can also employ light emitting diodes (LEDs). The LEDs are point light sources that are combined with optical members such as a reflection sheet, a light guiding plate (LGP), a diffusion sheet, a diffuser plate, a prism sheet, and/or the like, thereby forming the backlight unit. The LED type backlight unit has high response time and good color reproduction. However, the LED is costly and increases an overall thickness of the liquid crystal display.

Therefore, recently, a field emission type backlight unit that emits light using electron emission caused by an electric field has been developed as a replacement for the CCFL and LED type backlight units. The field emission type backlight unit is a surface (or area) light source, which consumes relatively low amount of power and can be designed to have a large size. Furthermore, the field emission type backlight unit does not require a number of optical members.

Also, unlike CCFL, which is a line light source, and LED, which is a point light source, the light emitted from the field emission type backlight unit is relatively uniform because the field emission type backlight unit is the surface light source. Therefore, an optical device applied to the field emission type backlight unit device (e.g., an optical device for making the light more uniform applied to the field emission type backlight unit) should have a different property from the optical members applied to the CCFL type backlight unit and the LED type backlight unit.

Among the optical members, the diffuser plate or diffusion sheet functions to diffuse the light emitted from the light source of the backlight unit. However, since the diffuser plate and diffusion sheet have a relatively low light transmittance and cause a light loss, the luminance of the backlight unit is deteriorated.

Furthermore, conventional backlight units maintain a uniform brightness throughout the light emission area when the associated display is driven. Therefore, it is difficult to improve the display quality to a sufficient level.

For example, when the liquid crystal panel assembly displays an image having a bright portion and a dark portion in accordance with an image signal, it is desirable to provide different intensities of light to the respective bright and dark portions so that the liquid crystal display can realize an image having an improved contrast ratio.

Therefore, it is desirable to provide a backlight unit that can overcome the shortcomings of the conventional backlight units and/or improve the contrast ratio of the image displayed by the liquid crystal display.

### SUMMARY OF THE INVENTION

Aspects of exemplary embodiments of the present invention are directed to a light emission device including a diffusing member (or diffuser) having an improved (or optimal) light transmittance appropriate for a surface light source and a display that can reduce a light loss by employing the light emission device.

Other aspects of exemplary embodiments of the present invention are directed to a light emission device that has a light emission surface divided into a plurality of sections and that can independently control a light emission intensity of each section, and a display that can enhance a contrast ratio by employing the light emission device.

An exemplary embodiment of the present invention provides a diffusing member for uniformly diffusing light emitted from a surface light source of a backlight unit for a non-emissive device, wherein the diffusing member has a light transmittance greater than or equal to 80%.

The diffusing member may further include first and second layers. For example, the first layer may be a diffuser plate and the second layer may be a diffuser sheet layered on the diffuser plate.

In another exemplary embodiment of the present invention, a light emission device includes a vacuum vessel that has first and second substrates facing each other, an electron emission unit that is provided on the first substrate, a light emission unit that is provided on the second substrate and that emits light using electrons emitted from the electron emission unit, a spacer that uniformly maintains a gap between the first and second substrates, and a diffusing member that is located above the second substrate and has a light transmittance greater than or equal to 80%.

The light emission unit may include first and second electrodes that are insulated from each other and crossed each other, and an electron emission region that is electrically connected to one of the first and second electrodes.

The light emission unit may have a phosphor layer and an anode electrode formed on a surface of the phosphor layer and the anode electrode may be applied with a voltage of 10kV or more.

The phosphor layer may be divided into a plurality of sections and a black layer is formed between the phosphor layers.

The diffusing member may be spaced apart from a surface (or outer surface) of the second substrate by a distance ranging from 5 to 10mm.

The electron emission region may be formed of at least one of a carbon-based material or a nanometer-sized material.

The diffusing member may further include first and second layers. For example, the first layer may be a diffuser plate and the second layer may be a diffuser sheet layered on the diffuser plate.

In still another exemplary embodiment of the present invention, a display includes a light emission device of the foregoing exemplary embodiment and a panel assembly that is located on (or in front of) the light emission device to display an image using light emitted from the light emission device.

The panel assembly may have a plurality of first pixels and the light emission device may have a plurality of second pixels, a number of the second pixels being less than a number of the first pixels and intensities of light emitted from the second pixels being different from each other.

The number of the first pixels in each row of the panel assembly may be greater than or equal to 240, and the number of the first pixels in each column of the panel assembly may be greater than or equal to 240.

The number of the second pixels in each row of the light emission device may range from 2 to 99, and the number of the second pixels in each column of the light emission device may range from 2 to 99.

The panel assembly may be a liquid crystal panel assembly.

The diffuser plate may include a harder material than that of the diffuser sheet.

The diffuser plate may be adapted to protect the diffuser sheet from being folded and/or wrinkled.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a partial exploded perspective view of a light emission device according to an exemplary embodiment of the present invention;
FIG. 2 is a partial enlarged perspective view of the light emission device of FIG. 1;
FIG. 3 is a partial enlarged sectional view of the light emission device of FIG. 2;
FIG. 4 is a partial exploded perspective view of a light emission device according to another exemplary embodiment of the present invention;
FIG. 5 is a partial exploded perspective view of a display according to an exemplary embodiment of the present invention; and
FIG. 6 is a block diagram of a driving unit for driving a display according to an embodiment of the present invention.

### DETAILED DESCRIPTION

In the following detailed description, only certain exemplary embodiments of the present invention are shown and described, by way of illustration. As those skilled in the art would recognize, the invention may be embodied in many different forms and should not be construed as being limited to the embodiments set forth herein. Also, in the context of the present application, when an element is referred to as being "on" another element, it can be directly on the another element or be indirectly on the another element with one or more intervening elements interposed therebetween. Like reference numerals designate like elements throughout the specification.

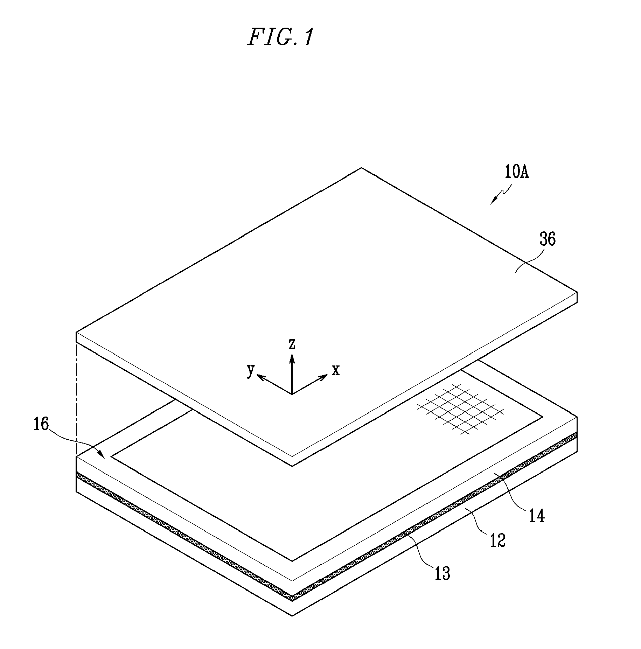

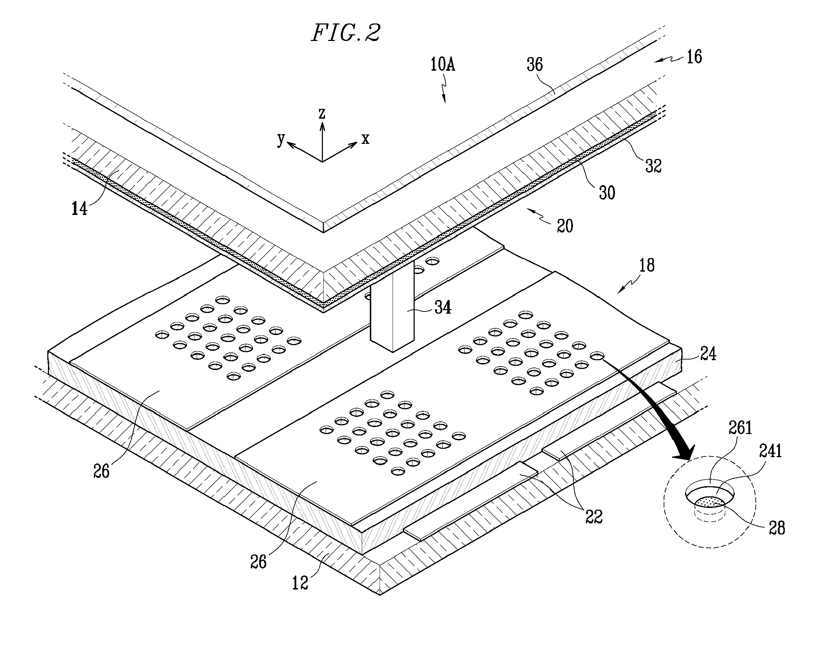

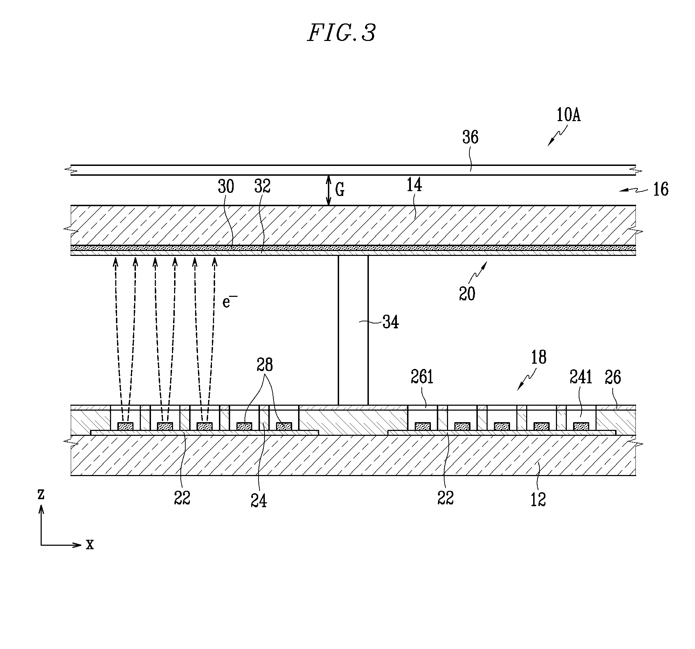

FIG. 1 is a partial exploded perspective view of a light emission device according to an exemplary embodiment of the present invention, FIG. 2 is a partial enlarged perspective view of the light emission device of FIG. 1, and FIG. 3 is a partial enlarged sectional view of the light emission device of FIG. 2.

Referring to FIGs. 1 through 3, a light emission device 10A of the present exemplary embodiment includes first and second substrates 12 and 14 facing each other in parallel with an interval therebetween (wherein the interval may be predetermined). A sealing member 13 is provided between peripheries (or periphery portions) of the first and second substrates 12 and 14 to seal them together to thus form a vacuum vessel. The interior of the vacuum vessel is kept to a degree of vacuum of about 1.33*10⁻⁴ Pa (10⁻⁶ Torr).

Each of the first and second substrates 12 and 14 has (or is divided into) an active region for contributing to the emission of visible light (or substantially emitting visible light) and an inactive region for surrounding the active region. An electron emission unit 18 for emitting electrons is provided at the active region of the first substrate 12, and a light emission unit 20 for emitting the visible light is provided at the active region of the second substrate 14.

The electron emission unit 18 includes first electrodes 22 arranged in a stripe pattern extending in a first direction and second electrodes 26 arranged in a stripe pattern extending in a second direction crossing the first electrodes 22. An insulation layer 24 is interposed between the first electrodes 22 and the second electrodes 26. The electron emission unit 18 further includes electron emission regions 28 electrically connected to the first electrodes 22 or the second electrodes 26.

When the electron emission regions 28 are formed on the first electrodes 22, the first electrodes 22 function as cathode electrodes for applying a current to the electron emission regions 28, and the second electrodes 26 function as gate electrodes for inducing electron emission from the electron emission regions 28 by forming an electric field using a voltage difference with the cathode electrodes.

By contrast, when the electron emission regions 28 are formed on the second electrodes 26, the second electrodes 26 function as the cathode electrodes, and the first electrodes 22 function (or become) the gate electrodes.

Among the first and second electrodes 22 and 26, the electrodes extending in rows (an x-axis in the drawings) of the light emission device 10A function as scan electrodes, and the electrodes extending in columns (a y-axis in the drawings) function as data electrodes.

Openings 261 and openings 241 are respectively formed in the second electrodes 26 and the insulation layer 24 to partly expose the surface of the first electrodes 22. Electron emission regions 28 are formed on the first electrodes 22 in the openings 241 of the insulation layer 24..

The electron emission regions 28 are formed of a material emitting electrons when an electric field is applied thereto under a vacuum atmosphere, such as a carbon-based material and/or a nanometer-sized material (i.e. having a size ranging from 1 nm to 1000 nm).

For example, the electron emission regions 28 can be formed of carbon nanotubes, graphite, graphite nanofibers, diamonds, diamond-like carbon, fullerene C₆₀, silicon nanowires or combinations thereof. The electron emission regions 28 may be formed through a screenprinting process, a direct growth process, and/or chemical deposition.

Considering an electron beam diffusion property and according to one exemplary embodiment, the electron emission regions 28 are arranged at a central portion of each crossing region of the first and second electrodes 22 and 26 rather than at a periphery portion of the crossing region.

Each crossing region of the first and second electrodes 22 and 26 may correspond to one pixel region of the light emission device 10A. Alternatively, two or more crossing regions of the first and second electrodes 22 and 26 may correspond to one pixel region of the light emission device 10A. In this case, two or more first electrodes 22 and/or two or more second electrodes 26 that are placed at a common pixel region are electrically connected to each other to receive a common driving voltage.

The light emission unit 20 includes a phosphor layer 30 and an anode electrode 32 formed on a surface of the phosphor layer 30. The phosphor layer 30 may be formed of a white phosphor layer or of a combination of red, green and blue phosphors, which can emit white light. In FIGs. 1 through 3, the former is illustrated as an example.

When the phosphor layer 30 is formed of the white phosphor layer, the phosphor layer may be formed on an entire surface of the second substrate 14 or patterned to have a plurality of sections defining the respective pixels.

Alternatively, the phosphor layer 30 includes red, green and blue phosphor layers. In this case, the phosphor layer in each pixel region may be patterned into a plurality of sections.

The anode electrode 32 may be formed of a metal layer, such as an aluminum (Al) layer, for covering the phosphor layer 30. The anode electrode 32 is an acceleration electrode that receives a high voltage to maintain the phosphor layer 30 at a high electric potential state. The anode electrode 32 functions to enhance the luminance of the active region by reflecting the visible light, which is emitted from the phosphor layer 30 toward the first substrate 12, back to the second substrate 14.

Disposed between the first and second substrates 12 and 14 are spacers 34 that are able to withstand a compression force applied to the vacuum vessel 16 and to uniformly maintain a gap between the first and second substrates 12 and 14. The spacers 34 are located at a portion surrounding the crossing region of the first and second electrodes 22 and 26. For example, one of the spacers 34 may be formed of glass or ceramic and located between one and another one of the second electrodes 26. In FIGs. 2 and 3, a rectangular pillar type spacer is exemplarily illustrated.

The above-described light emission device 10A is driven by applying external driving voltages to the first electrodes 22 and the second electrodes 26 and by applying a positive direct current voltage of several thousand volts to the anode electrode 32.

Electric fields are formed around the electron emission regions 28 at the pixels where the voltage difference between the first and second electrodes 22 and 26 is equal to or greater than the threshold value, and thus electrons are emitted from the electron emission regions 28. The emitted electrons collide with a corresponding portion of the phosphor layer 30 of the relevant pixels by being attracted by the high voltage applied to the anode electrode 32, thereby exciting the phosphor layer 30. The intensity of light emission of the phosphor layer of each pixel corresponds to the amount of electron emission of the corresponding pixel.

The first and second substrates 12 and 14 are spaced apart from each other by a relatively large distance ranging from about 5 to about 20mm. By enlarging the distance between the substrates 12 and 14, arcing (or arcing generated) in the vacuum vessel 16 can be reduced. The anode electrode 32 may be applied with a voltage of 10kV or more, and, in one embodiment, the anode electrode 32 is applied with a voltage of 15kV. The above-described light emission device 10A can realize a luminance of 10,000cd/m² at a central portion of the active region.

The light emission device 10A of the present invention further includes a diffusing member (or diffuser) 36 located to face an outer surface of the second substrate 14 to diffuse and scatter the light emitted from the phosphor layer 30. The diffusing member 36 has a light transmittance of 80% or more.

In one embodiment, when the light transmittance is less than 80%, as shown in following Table 1, the light loss increases due to the diffusing member 36, thereby deteriorating an overall luminance of the light emission device.

Table 1 shows a variation of a luminance depending on a variation of a light transmittance of the diffusing member 36 of the light emission device 10A. It can be noted from Table that the luminance is significantly deteriorated when the light transmittance is less than 80%.

**Table 1**

| | | | | | | | | | | | |
|---|---|---|---|---|---|---|---|---|---|---|---|
| Light Transmittance(%) | 20 | 30 | 40 | 50 | 60 | 70 | 80 | 90 | 93 | 96 | 99 |
| Luminance (cd/m²) | 100 | 150 | 200 | 250 | 300 | 350 | 400 | 450 | 465 | 480 | 495 |

The light transmittance of the diffusing member 36 may be varied depending on a foaming ratio and a material thereof. For example, the light emission transmittance of the diffusing member may be varied depending on a wavelength determined according to the material thereof. Generally, the diffusing member may be formed of a material including polystyrene.

The diffusing member 36 may be spaced apart from the outer surface of the second substrate 14 by a gap G ranging from 5 to 10mm. When the gap G is less than 5mm, it is difficult to cure a screen defect caused by a phosphor layer that cannot emit light. When the gap G is greater than 10mm, an overall thickness of the light emission device increases and the light loss increases.

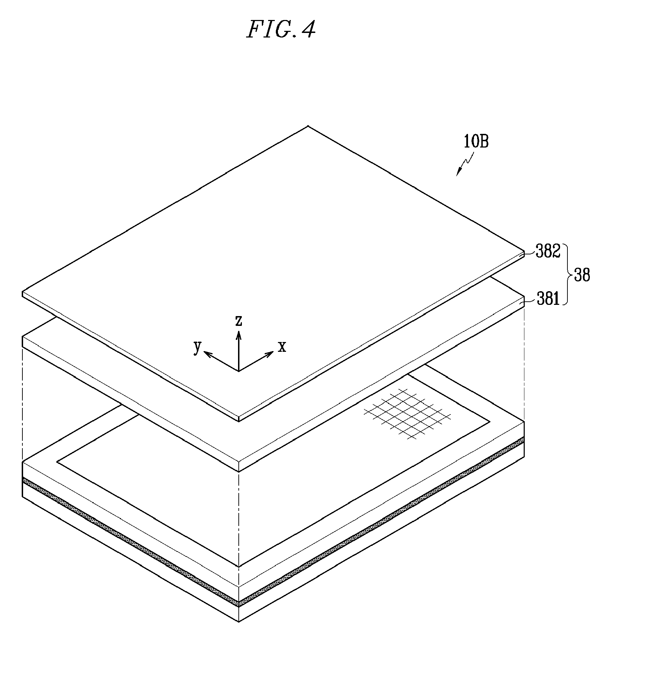

FIG. 4 is a perspective schematic view of a light emission device according to another exemplary embodiment of the present invention.

Referring to FIG. 4, a light emission device 10B of the present exemplary embodiment includes a diffusing member (or diffuser) 38 formed with two layers. For example, the diffusing member 38 includes a diffuser plate 381 located above the second substrate 14 and a diffuser sheet 382 layered on the diffuser plate 381. The diffuser plate 381 may be formed of a hard material and the diffuser sheet 382 may be formed of a flexible material. When the light emission device 10B has a relatively large size, the diffuser plate 381 functions to prevent (or protect) the diffuser sheet 382 from being bent in a direction or wrinkled.

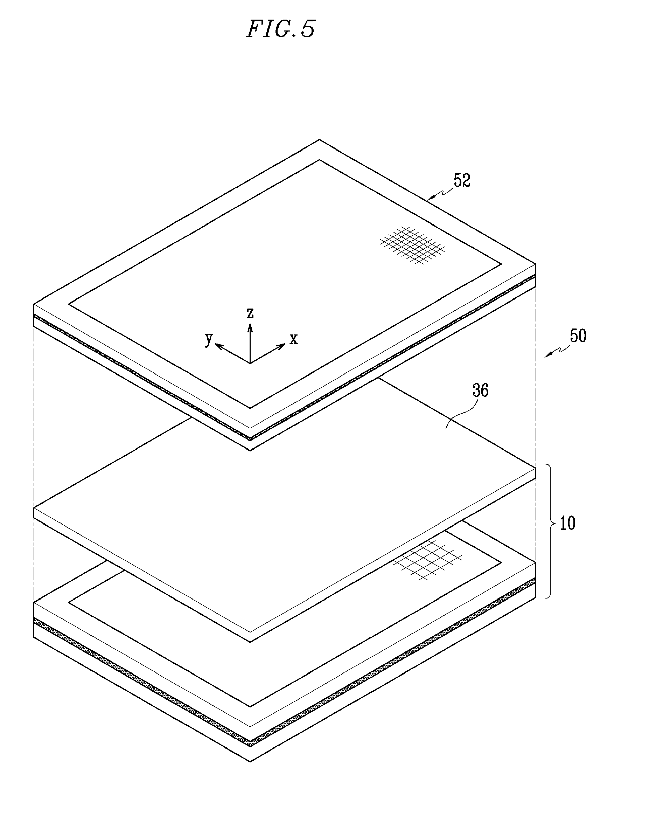

FIG. 5 is an exploded perspective schematic view of a display according to an embodiment of the present invention.

Referring to FIG. 5, a display 50 includes a panel assembly 52 having a plurality of pixels arranged in rows and columns and a light emission device 10 for emitting light toward the panel assembly 52. A liquid crystal panel assembly may be used as the panel assembly 52, and the light emission device 10 may be the light emission device 10A of FIGs. 1 through 3 that includes the diffusing member (or diffuser) 36 as exemplarily shown in FIG. 5. However, the present invention is not thereby limited. For example, the light emission device 10 may be the light emission device 10B of FIG. 4 that includes the diffusing member (or diffuser) 38.

The rows are along a horizontal direction (an x-axis in the drawings) of the display 50 (e.g., a screen of the panel assembly 52). The columns are along a vertical direction (a y-axis in the drawing) of the display 50 (e.g., the screen of the panel assembly 52).

The light emission device 10 includes a plurality of pixels, the number of which is less than the number of pixels of the panel assembly 52 so that one pixel of the light emission device 10 corresponds to two or more pixels of the panel assembly 52.

When the number of pixels arranged in a row of the panel assembly 52 is M and the number of pixels arranged in a column of the panel assembly 52 is N, the number of pixels M may be greater than or equal to 240 and the number of pixels N may be greater than or equal to 240. When the number of pixels arranged in a row of the light emission device 10 is M' and the number of pixels arranged in a column of the light emission device 10 is N', the number of pixels M' may a number ranging from 2 to 99 and the number of pixels N' may be a number ranging from 2 to 99.

The light emission device 10 is a self-emissive display panel having an M'xN' resolution. In one embodiment, a light emission intensity of each of the pixels of the light emission device 10 is independently controlled to provide a proper intensity of light to the corresponding pixels of the panel assembly 52.

At this point, a minimum 2X2 resolution of the light emission device 10 is a minimum resolution for allowing the light emission device 10 to function as the display panel. In one embodiment, when the resolution of the light emission device 10 has a resolution greater than 99X99, the driving of the light emission device 10 may become too complicated and the cost for manufacturing a driving circuit may be too high. That is, by considering both of the function and manufacturing efficiency of the light emission device 10, the maximum resolution of 99X99 is a maximum resolution that should be used.

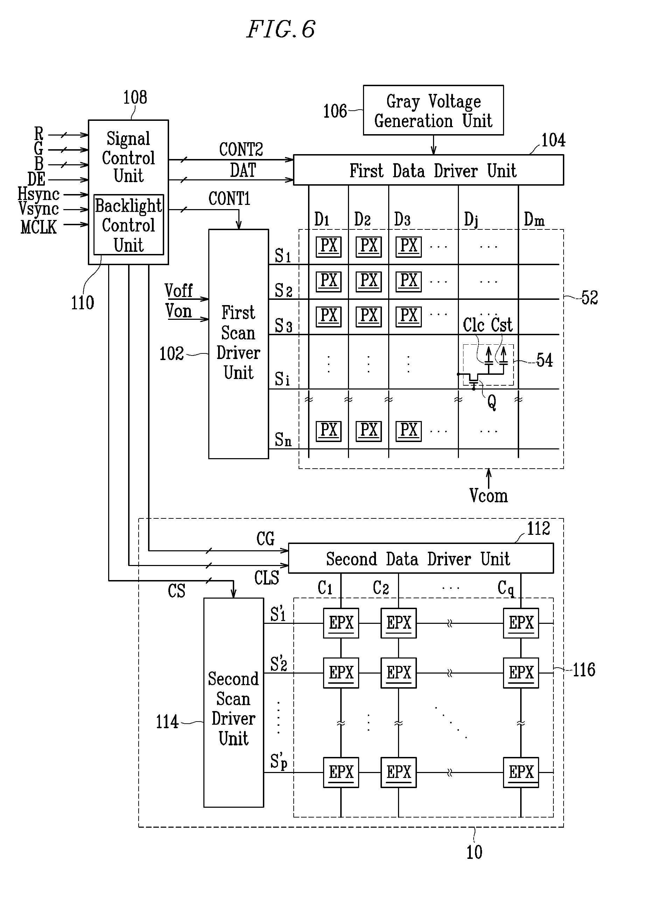

FIG. 6 is a block diagram of a driving unit (or part) for driving a display, e.g., the display 50 of FIG. 5.

Referring to FIG. 6, a driving part of the display includes a first scan driver (or driver unit) 102 and a first data driver (or driver unit) 104 connected to the panel assembly 52, a gray voltage generation unit 106 connected to the first data driver 104, a second scan driver (or driver unit) 114, and a second data driver (or driver unit) 112 connected to a display unit 116 of the light emission device 10, a light emission control unit (or backlight control unit) 110 for controlling the light emission device 10, and a signal control unit 108 for controlling the panel assembly 52 and the light emission control unit 110.

When considering the panel assembly 52 as an equivalent circuit, the panel assembly 52 includes a plurality of signal lines and a plurality of first pixels PX arranged in rows and columns and connected to the signal lines. The signal lines include a plurality of first scan lines S1-Sn for transmitting first scan signals and a plurality of first data lines D1-Dm for transmitting first data signals.

Each first pixel PX, e.g., a pixel 54 connected to an ith (i = 1, 2, .. n) first scan line Si and a jth (j = 1, 2, ..m) first data line Dj, includes a switching element Q connected to the ith first scan line Si and the jth first data line Dj, and liquid crystal and sustain capacitors Clc and Cst. In other embodiments, the sustain capacitor Cst may be omitted.

The switching element Q is a 3-terminal element such as a thin film transistor (TFT) formed on a second substrate (see second substrate 14 of FIG. 2, for example) of the panel assembly 52. That is, the switching element Q includes a control terminal connected to the first scan line Si, an input terminal connected to the first data line Dj, and an output terminal connected to the liquid crystal and sustain capacitors Clc and Cst.

The gray voltage generation unit 106 generates two sets of gray voltages (or two sets of reference gray voltages) related to the transmittance of the first pixels PX. One of the two sets has a positive value with respect to a common voltage Vcom and the other has a negative value.

The first scan driver 102 is connected to the fist scan lines S1-Sn of the panel assembly 52 to apply a first scan signal that is a combination of a switch-on-voltage Von and a switch-off-voltage Voff, to the first scan lines S1-Sn.

The first data driver 104 is connected to the first data lines D1-Dm of the panel assembly 52. The first data driver 104 selects a gray voltage from the gray voltage generation unit 106 and applies the selected gray voltage to the first data lines D1-Dm. However, when the gray voltage generation unit 106 does not provide all of the voltages for all of the gray levels, but provides only a number of reference gray voltages (wherein the number may be predetermined), the first data driver 104 then divides the reference gray voltages, generates the gray voltages for all of the gray levels, and selects a first data signal from the gray voltages.

The signal control unit 108 controls the first scan and first data drivers 102 and 104, and includes the light emission control unit (or backlight control unit) 110 for controlling the light emission device 10. The backlight control unit 110 controls the second scan driver 114 and the second data driver 112 of the light emission device 10. The signal control unit 108 receives input image signals R, G and B and an input control signal for controlling the display of the image from an external graphic controller.

The input image signals R, G and B have luminance information of each first pixel PX. The luminance has a number of gray levels that may be predetermined (e.g., 1024(=210), 256(=28), 64(=26) gray levels). The input control signal may be a vertical synchronizing signal Vsync, a horizontal synchronizing signal Hsync, a main clock signal MCLK, and/or a data enable signal DE.

The signal control unit 108 properly processes the input image signals R, G and B in response to the operating condition of the panel assembly 52 with reference to the input control signal, and generates a first scan driver control signal CONT1 and a first data driver control signal CONT2. The signal control unit 108 transmits the first scan driver control signal CONT1 to the first scan driver 102, and transmits the first data driver control signal CONT2 and the processed image signal DAT to the first data driver 104.

The display unit (or display portion 116) of the light emission device 10A includes a plurality of second pixels EPX, each of which is connected to one of second scan lines S'1-S'p and one of second data lines C1-Cq. Each second pixel EPX emits light according to a difference between the voltages applied to the corresponding one of the second scan lines S'1-S'p and the corresponding one of the second data lines C1-Cq. The second scan lines S'1-S'p correspond to the scan electrodes of the light emission device 10 and the second data lines C1-Cq correspond to the data electrodes of the light emission device 10.

The signal control unit 108 generates a light emission control signal of the light emission device 10 using the input image signals R, G and B with respect to the plurality of first pixels PX corresponding to one of the second pixels EPX of the light emission device 10. The light emission control signal includes a second data driver control signal CD, a light emission signal CLS and a second scan driver control signal CS. Each second pixel EPX of the light emission device 10 emits light in response to the light emission of the first pixels PX according to the second data driver control signal CD, the light emission signal CLS and the second scan driver control signal CS.

That is, the signal control unit 108 detects a highest gray level among the gray levels of the plurality of first pixels PX (hereinafter, "first pixel group") using the input image signals R, G and B with respect to the first pixel group PX corresponding to one of the second pixels EPX of the light emission device 10, and transmits the detected highest gray level to the light emission control unit 110. The light emission control unit 110 calculates the gray level required for exciting the second pixel EPX according to the detected highest gray level, converts the calculated gray level into digital data, and transmits the digital data to the second data driver (or driver unit) 112.

In this embodiment, the light emission signal CLS includes digital data above 6-bit to represent the gray level of the second pixel EPX. The second data driver control signal CD allows each second pixel EPX to emit light by synchronizing with the corresponding first pixel group PX. That is, the second pixel EPX is synchronized with the corresponding first pixel group PX in response to the image and emits the light with a certain gray level that may be predetermined.

The second data driver 112 generates a second data signal according to the second data driver control signal CD and the light emission signal CLS and transmit the second data signal to the second data lines C1-Cq.

In addition, the light emission control unit 110 generates the second scan driver control signal CS of the light emission device 10 using a horizontal synchronizing signal Hsync. That is, the second scan driver 114 is connected to the second scan lines S'1-S'p. The second scan driver 114 generates a second scan signal according to the second scan driver control signal CS and transmits the second scan signal to the second scan lines S'1-S'p. While a switch-on-voltage Von is applied to the plurality of first pixels PX corresponding to one of the second pixels EPX of the light emission device 10, the second scan signal is applied to the second scan line S'1 -S'p of the second pixel EPX.

Then, the second pixels EPX emit light in response to the gray level of the corresponding first pixel group PX according to the second scan voltage and the second data voltage. In this embodiment, a voltage corresponding to the gray level may be applied to the second data lines C1-Cq of the second pixels EPX while a fixed voltage may be applied to the second scan lines S'1-S'p. The second pixels EPX emit light according to a voltage difference between the scan and data lines.

As a result, the display of the present exemplary embodiment can enhance the contrast ratio of the screen, thereby improving the display quality.

In addition, the display of the exemplary embodiment includes a diffusing member having a relatively high light transmittance, thereby dramatically reducing or minimizing a light loss occurring when the light passes through the diffusing member. Therefore, there is little or no need to consider light loss when designing the light emission device. That is, there is little or no need to excessively increase or enhance the light intensity of the light emission device. As such, the display of the present exemplary embodiment can provide a superior display quality with relatively low power consumption.

Also, in an embodiment of to the present invention, even when a high voltage, e.g., a voltage at above 10kV, is applied to the anode electrode, the electric charges charged on the spacer can be effectively discharged to the external side without generating a short circuit between the driving and anode electrodes. As a result, the luminance non-uniformity problem caused by the charging of the spacer can be reduced or eliminated.

Furthermore, since the light emission device according to an embodiment of the present invention can be formed to have a relatively large size, it can be effectively applied to a large-size display of over 30 inches.

In the light emission device according to an embodiment of the present invention, since the contrast ratio is enhanced, the display quality can be improved. In addition, the power consumption of the light emission device can be reduced. Furthermore, the light emission device can be applied to the large-size display of over 30 inches.

## Claims

1. A light emission device comprising:
a vacuum vessel including a first substrate (12) and a second substrate (14) facing the first substrate (12);
an electron emission unit (18) on a surface of the first substrate (12) facing the second substrate (14);
a light emission unit (20) on a first surface of the second substrate (14) facing the first substrate (12) for emitting light upon excitation by electrons emitted from the electron emission unit (18);
a spacer (34) for maintaining a uniform gap between the first and second substrates (12, 14); and
a diffuser (36, 38) on a second surface of the second substrate (14) having a light transmittance greater than or equal to 80%.

2. The light emission device of claim 1, wherein the light emission unit (18) comprises:
a first electrode (22) and a second electrode (26) insulated from the first electrode (22), the second electrode (26) crossing the first electrode (22); and
an electron emission region (28) electrically connected to the first electrode (22) or the second electrode (26).

3. The light emission device of one of the preceding claims, wherein the light emission unit (20) has a phosphor layer (30) and an anode electrode (32) on a surface of the phosphor layer (30), and wherein the anode electrode (32) is adapted to be applied with a voltage of 10kV or more.

4. The light emission device of claim 3, wherein the phosphor layer (30) is divided into a plurality of sections and a black layer is formed between the phosphor layers (30).

5. The light emission device of one of the preceding claims, wherein the diffuser (36, 38) is spaced apart from a surface of the second substrate (14) by a distance ranging from 5 to 10mm.

6. The light emission device of one of the preceding claims, wherein the diffuser (38) includes a first layer and a second layer, wherein the first layer is a diffuser plate (381) and the second layer is a diffuser sheet (382) layered on the diffuser plate (381).

7. The light emission device of claim 6, wherein the diffuser plate (381) comprises a harder material than that of the diffuser sheet (382) for protecting the diffuser sheet (382) from being folded and/or wrinkled.

8. A display comprising:
a light emission device (10) according to one of claims 1-7; and
a panel assembly (52) located on the light emission device (10) to display an image using light emitted from the light emission device (10).

9. The display of claim 8, wherein the panel assembly (52) comprises a plurality of first pixels (PX), wherein the light emission device (10) comprises a plurality of second pixels (EPX), wherein the second pixels (EPX) are less in number than the first pixels (PX), and wherein each of the second pixels (EPX) is adapted to emit light with independently controlled intensities.

10. The display of one of claims 8 and 9, wherein the first pixels (PX) in each row of the panel assembly (52) comprise at least 240 pixels, and wherein the first pixels (PX) in each column of the panel assembly (52) comprise at least 240 pixels.

11. The display of one of claims 8-10, wherein each row of the light emission device (10) comprises a number of second pixels (EPX) ranging from 2 to 99, and wherein each column of the light emission device (10) comprises a number of second pixels (EPX) ranging from 2 to 99.

12. The display of one of claims 8-11, wherein the panel assembly (52) is a liquid crystal panel assembly.

13. A use of a diffuser (36, 38) for a backlight unit (10) for a non-emissive display device (52), wherein the diffuser (36, 38) has a light transmittance greater than or equal to 80% and wherein the diffuser (36, 38) uniformly diffuses light emitted from a surface light source of the backlight unit (10).
